# EUROPÄISCHE PATENTSCHRIFT

(11) **EP 1 300 842 B1**
(45) Veröffentlichungstag und Bekanntmachung des Hinweises auf die Patenterteilung: **25.07.2007**
(21) Anmeldenummer: 01123887.0
(22) Anmeldetag: 05.10.2001
(51) Int. Cl.: G11B 20/00

(54) **Verfahren und System zur autorisierten Entschlüsselung von verschlüsselten Daten mit mindestens zwei Zertifikaten**
Method and system for authorized decryption of encrypted data using at least two certificates
Méthode et système de décryptage autorisé de données cryptées constitués d'au moins deux certificats

(43) Veröffentlichungstag der Anmeldung: 09.04.2003
(73) Patentinhaber: Krempl, Stefan, 80799 München (DE)
(72) Erfinder: Krempl, Stefan, 80799 München (DE)
(74) Vertreter: Grünecker, Kinkeldey, Stockmair & Schwanhäusser Anwaltssozietät

(56) Entgegenhaltungen:
- WO-A-01/89133
- DE-A- 10 024 753
- DE-A- 10 051 571
- US-A- 5 748 738
- US-A- 5 878 144
- US-A- 5 999 628

## Beschreibung

### Gebiet der Erfindung

Die Erfindung betrifft ein Verfahren und ein System zur autorisierten Entschlüsselung von verschlüsselten Daten, insbesondere mit Hilfe von Zertifikaten.

### Stand der Technik

Elektronische bzw. digitale Daten sind aufgrund ihrer Natur prinzipiell beliebig vervielfältigbar. Die Wahrung des Urheberrechtsschutzes für Daten dieser Art stellt daher ein besonderes Problem dar, da technische Hürden oft mit relativ einfachen Mitteln überwunden werden können, bzw. da Mittel zur Umgehung, wie im Falle des DVD-Kopierschutzes, im Internet öffentlich gemacht werden. Personen wie der Autor, Herausgeber oder Produzent haben dagegen ein Interesse, daß die Daten nur von berechtigten Personen (etwa gegen Bezahlung) entschlüsselt und genutzt werden.

Aufgabe der vorliegenden Erfindung ist es daher, ein Verfahren und ein System zur autorisierten Entschlüsselung von verschlüsselten Daten zur Verfügung zu stellen, das ein einfaches unautorisiertes Kopieren von Daten verhindert und zugleich eine einfache Handhabung durch den Benutzer ermöglicht.

Die DE 100 51 571 A1 offenbart ein Verfahren zur Entschlüsselung von verschlüsselten Daten unter Verwendung eines Benutzerzertifikats.

### Beschreibung der Erfindung

Diese Aufgabe wird durch das Verfahren gemäß Anspruch 1 und durch das System gemäß Anspruch 13 gelöst.

Gemäß dem Verfahren werden verschlüsselte Daten bereitgestellt. Bei Gültigkeit von mindestens zwei Zertifikaten wird ein Schlüssel bereitgestellt, mit dem eine Entschlüsselung der Daten erfolgt. Dieses Verfahren hat den Vorteil, daß die Daten über beliebige, offene Kommunikationskanäle verbreitet werden können. Dadurch können die Distribution bzw. Vertrieb der Daten, der Erwerb der Berechtigung diese zu entschlüsseln und nutzen und die eigentliche Entschlüsselung und Nutzung weitgehend unabhängig von einander durchgeführt werden. Die Verwendung von mindestens zwei Zertifikaten verhindert sicher und effizient ein unautorisiertes Kopieren von Daten.

Die Begriffe Schlüssel und Zertifikat werden im kryptographischen Sinne verwendet. Ein Schlüssel dient dazu, einen Klartext in ein Chiffrat bzw. ein Chiffrat in einen Klartext zu transformieren. Ein Klartext ist nicht notwendigerweise ein menschenlesbarer Text, es handelt sich um direkt nutzbare Daten, bspw. Text- oder Bilddaten, ein Computerprogramm, eine abspielbare Audio- oder Videodatei, o.ä. Sind die für die Ent- und Verschlüsselung verwendeten Schlüssel identisch, spricht man von symmetrischer Verschlüsselung, sonst von asymmetrischer Verschlüsselung. Ein Beispiel für letzteres sind Public-Key-Verfahren, bei denen ein "öffentlicher Schlüssel" öffentlich ist, d.h. frei zugänglich ist. Das Gegenstück hierzu ist der "private Schlüssel", der nur einer begrenzten Personenzahl, ggf. nur einer Person, bekannt ist. Ein Zertifikat kann zur Identifizierung von Personen oder Daten dienen. Es kann einen oder mehrere Schlüssel enthalten, sowie die Erlaubnis/Berechtigung, gewisse Daten oder Vorrichtungen zu nutzen. Zertifikate können eine zeitlich begrenzte Gültigkeit haben.

Die mindestens zwei Zertifikate umfassen mindestens ein Attribut- und ein Benutzerzertifikate. Ein Benutzerzertifikat dient zur Identifikation eines Benutzers. Darunter fallen z.B. natürliche Personen, juristische Personen oder Vorrichtungen wie Datenverarbeitungseinrichtungen. Das Zertifikat enthält entsprechende Informationen wie Name, Email-Adresse oder Identifikationsnummer/Seriennummer. Die Erlaubnis/Berechtigung zur Nutzung von bestimmten Daten kann in Form eines Attributzertifikats gespeichert werden, das spezifisch für gewisse Daten oder eine Menge von Daten ist. Das Attributzertifikat kann benutzerspezifisch sein. Es kann Einschränkungen bezüglich Ort, Zeit, Benutzervorrichtung (z.B. Datenverarbeitungseinrichtung, Abspielvorrichtung) oder anderen Merkmalen beinhalten. Die Verwendung von Attributzertifikaten gewährleistet im Vergleich zu anderen Verfahren die Portabilität der Datennutzung. Die Erlaubnis einen Inhalt zu nutzen, wird nicht auf eine bestimmte Maschine oder Software abgestellt, sondern kann tatsächlich einer bestimmten Person zugeordnet werden oder einem tragbaren Gegenstand wie einer Chipkarte.

Bei den Daten handelt es sich um elektronische Daten, bspw. Audio- oder Videodaten, um textbasierte Dokumente oder um Computerprogramme. Sie können in analoger oder digitaler Form vorliegen und auf einem beliebigen Speichermedium gespeichert sein. Dieses Speichermedium kann direkt zugreifbar sein, wie ein Datenspeicher in einem LAN (server, network attached storage, etc.), ein Datenspeicher eines Internetservers, ein tragbarer Speicher in einer Lesevorrichtung/Laufwerk (bspw. Diskette, CDROM). Die Daten werden von einem Herausgeber oder Anbieter bereitgestellt; dabei kann es sich bspw. um einen Autor/Urheber, Produzenten, Verlag, Zwischen- oder Endhändler handeln.

Die Daten sind vorzugsweise symmetrisch verschlüsselt. Im Unterschied zu anderen Verfahren können die Daten in üblichen Dateiformaten gespeichert werden und benötigen keine speziellen "Sicherheits-Container" mit proprietären und unter Umständen geheimen Formaten.

In einer bevorzugten Ausführungsform erfolgt das Bereitstellen des Schlüssels, indem der Schlüssel mit Hilfe der mindestens zwei Zertifikate ermittelt, bspw. berechnet, wird. Wenn die Daten speziell für einen bestimmten Benutzer mit dessen öffentlichen Schlüssel verschlüsselt wurden, kann der Schlüssel auch mittels eines privaten Schlüssels des Benutzers berechnet werden. Für die Ermittlung des Schlüssels kann auch ein zusätzliches Zertifikat des Herausgebers der Daten verwendet werden.

In einer vorteilhaften Alternative wird der Schlüssel über ein Daten-, Telefon- oder Rundfunknetz bereitgestellt. Hierbei kann er schon gespeichert vorliegen oder bei Bedarf erzeugt werden. Die Speicherung oder Erzeugung kann in einem System des Herausgebers erfolgen. Der Schlüssel kann mit dem privaten Herausgeberschlüssel berechnet werden. Der Schlüssel wird bevorzugt verschlüsselt bereitgestellt. Die Verschlüsselung kann asymmetrisch erfolgen, zum Beispiel mit dem öffentlichen Schlüssel des Benutzers. Dieser öffentliche Schlüssel kann in dem Benutzerzertifikat enthalten sein. Durch die Verwendung von Public-Key-Verschlüsselung wird das Schlüsselverteilungsproblem gelöst. Nach der Bereitstellung kann der Schlüssel vom Benutzer in einer Speichereinheit gespeichert werden.

Vorzugsweise wird neben den verschlüsselten Daten eine Zusatzinformation bereitgestellt. Diese kann zur Identifikation der verschlüsselten Daten verwendet werden, ohne daß diese entschlüsselt werden, und kann einen Identifikator des Inhalts (z.B. Seriennummer) und/oder des Herausgebers (z.B. Zertifikat, URL) enthalten.

Neben den verschlüsselten Daten kann eine Zusatzinformation bereitgestellt werden, die zum Bereitstellen des Schlüssels der verschlüsselten Daten verwendet wird. Diese Zusatzinformation kann mit einem privaten Schlüssel des Herausgebers verschlüsselt sein. Falls mit der Zusatzinformation kein Bereitstellen des Schlüssels möglich ist, kann eine neue Zusatzinformation mit oder ohne einer neuen verschlüsselten Datei bereitgestellt werden.

Vorteilhafterweise wird neben den verschlüsselten Daten eine Zusatzinformation bereitgestellt, die einen Teil der verschlüsselten Daten in unverschlüsselter Form enthält. Ein solcher sogenannter Teaser kann Marketingzwecken dienen. Er kann ohne Entschlüsselung genutzt werden, bspw. als Programm ausführbar sein.

Um Betrugsversuchen vorzubeugen, kann die Zusatzinformation kryptographisch gesichert, d.h. verschlüsselt, und/oder von dem Herausgeber digital signiert sein. Sie kann die Form eines Zertifikats haben.

Die Verwendung von Standards hierbei vermeidet die Notwendigkeit zumeist weniger getesteter proprietärer Verfahren. Aufgrund seiner Natur muß das Attributzertifikat nicht geheim gehalten werden und kann auch auf im Internet vorhandenen Speicherdiensten abgelegt werden. So kann ein Verlust vermieden werden und über einfache Mechanismen eine Wiederherstellung gewährleistet sein. Im besonderen gilt dies wenn das Attributzertifikat, das die Erlaubnis bewirkt, sich nicht auf den öffentlichen Schlüssel des Benutzers sondern auf dessen Identität (z.B. "Distinguished Name" des Zertifikats) bezieht.

Die Gültigkeitsprüfung der mindestens zwei Zertifikate erfolgt vorzugsweise in einer Datenverarbeitungseinrichtung eines Herausgebers der Daten. Alternativ kann sie bei dem Benutzer oder von dritter Seite (z.B. Trustcenter) durchgeführt werden. Zur Gültigkeitsprüfung kann neben den Zertifikaten auch eine den Daten zugeordnete Zusatzinformation verwendet werden. Insbesondere wenn sie nicht bei dem Herausgeber durchgeführt wird ist es von Vorteil, zur Gültigkeitsprüfung weitere Zertifikate wie Herausgeberzertifikate zu verwenden. Die Gültigkeitsprüfung kann aus verschiedenen Schritten bestehen: Die Gültigkeit der einzelnen Zertifikate kann überprüft werden. Außerdem kann überprüft werden, ob die verschiedenen Zertifikate untereinander und evtl. zusätzlich mit einer ggf. vorhandenen, den Daten zugeordneten Zusatzinformation zusammenpassen. Falls die Gültigkeitsprüfung ein negatives Ergebnis liefert, bspw. falls eines der Zertifikate nicht mehr gültig ist, kann dem Benutzer ein neues Zertifikat bereitgestellt oder ein Zertifikatsupdate durchgeführt werden.

Dabei ist es von Vorteil, wenn die Gültigkeitsprüfung der mindestens zwei Zertifikate in einer tragbaren Datenverarbeitungseinrichtung, insbesondere einem Notebook, elektronischen Organizer oder Mobiltelefon, erfolgt.

Nach der Entschlüsselung können die Daten gespeichert werden. Zur Vermeidung unautorisierten Kopierens, können die Daten vorzugsweise direkt weiterverwendet werden.

Ein vorteilhaftes Verfahren zur autorisierten Ausführung eines verschlüsselten Datenverarbeitungsprogramms umfaßt die Schritte: Entschlüsseln des verschlüsselten Datenverarbeitungsprogramms mit einem der oben erwähnten Verfahren, Laden des Datenverarbeitungsprogramms in den Arbeitsspeicher einer Datenverarbeitungseinrichtung, Ausführen des Datenverarbeitungsprogramms durch die Datenverarbeitungseinrichtung. Wird das Datenverarbeitungsprogramm nach der Entschlüsselung direkt in einen Arbeitsspeicher geladen, kann ein Abspeichern des Datenverarbeitungsprogramms vermieden werden.

Ein vorteilhaftes Verfahren zur autorisierten Wiedergabe von verschlüsselten akustischen oder optischen Daten umfaßt die Schritte: Entschlüsseln der verschlüsselten akustischen oder optischen Daten mit einem der oben erwähnten Verfahren, Weiterleiten der akustischen oder optischen Daten an eine Wiedergabevorrichtung. Die Wiedergabevorrichtungen umfassen bspw. Bildschirme, Lautsprecher, Stereoanlagen, Verstärker oder eBooks. Vorzugsweise erlauben die Wiedergabevorrichtungen nur eine Wiedergabe und kein direktes Kopieren der Daten. Die Daten können in einem Streaming-Media Format an die Wiedergabevorrichtung weitergeleitet werden.

Insbesondere bei der Wiedergabe in tragbaren Wiedergabevorrichtungen kann eine Speicherung des Inhaltes in der Wiedergabevorrichtung notwendig sein, wenn nicht eine andauernde drahtlose Verbindung aufrechterhalten werden soll. Die Sicherheit kann dann bspw. auf verschiedene Weise gewährleistet werden:
a) Die Wiedergabevorrichtung selbst erlaubt ausschließlich eine Wiedergabe des Inhaltes und keine Replikation oder Vervielfältigung. In diesem Fall kann der entschlüsselte Inhalt nach Identifikation der Einrichtung an diese übertragen werden.
b) Die Wiedergabevorrichtung besitzt eine gesichertes kryptographisches Modul. Der Inhalt kann verschlüsselt zusammen mit dem Schlüssel in der Einrichtung abgelegt werden.
c) Die Wiedergabevorrichtung besitzt eine gesichertes kryptographisches Modul und die Möglichkeit, einen speziellen Schlüssel zu speichern. Die Daten können dann verschlüsselt mit dem speziellen Schlüssel in die Wiedergabevorrichtung übertragen und dort gespeichert werden. Für die Nutzung können die Daten mit dem speziellen Schlüssel entschlüsselt werden.
d) Die Wiedergabevorrichtung besitzt ein kryptographisches Modul und eine Anschlußmöglichkeit für ein kryptographisches Modul. Die Daten können dann verschlüsselt zusammen mit dem verschlüsselten Schlüssel in der Wiedergabevorrichtung gespeichert werden. Für die Nutzung wird der Schlüssel bereitgestellt und der Inhalt damit entschlüsselt.

Vorzugsweise wird zum Bereitstellen eines Schlüssels bei Gültigkeit von mindestens zwei Zertifikaten ein Computerprogramm verwendet, das direkt oder indirekt in den Arbeitsspeicher eines Computers geladen werden kann und Kodierungsabschnitte umfaßt, die ein Bereitstellen eines Schlüssels bei Gültigkeit von mindestens zwei Zertifikaten ausführen können.

Ein System zur autorisierten Entschlüsselung von verschlüsselten Daten, insbesondere zur Durchführung eines der obigen Verfahren, enthält ein kryptographisches Modul und mindestens eine Speichereinheit, in welcher mindestens zwei Zertifikate gespeichert sind. Falls das System mehrere Speichereinheiten enthält, können die mindestens zwei Zertifikate in einem oder verschiedenen Speichereinheiten gespeichert sein.

Vorzugsweise sind das kryptographische Modul und/oder die Speichereinheiten in sicheren Datenverarbeitungseinrichtungen vorgesehen. Es kann sich dabei um Datenverarbeitungseinrichtungen handeln, deren kryptographisches Modul und/oder Speichereinheiten nicht oder nur beschränkt von außerhalb der Datenverarbeitungseinrichtung zugreifbar oder steuerbar sind. Vorzugsweise werden ein oder mehrere gestaffelte kryptographische Datenverarbeitungseinrichtungen und Datenspeicher verwendet. Je höher der durch eine Kompromittierung einer Funktion zu erwartende Schaden ist, desto höher wird die Sicherheit, bzw. der notwendige Aufwand diese Sicherheitsfunktionen zu überwinden, gewählt. Auf diese Weise kann das System von der Leistungsfähigkeit preiswerter Standardkomponenten wie Personal Computern profitieren und die Sicherheit von spezialisierten Elementen wie Chipkartenlesern und Chipkarten aufweisen.

Es ist von Vorteil, wenn in dem System zur autorisierten Entschlüsselung von verschlüsselten Daten das kryptographische Modul und die mindestens eine Speichereinheit mit mindestens zwei darin gespeicherten Zertifikaten in einer Chipkarte vorgesehen sind. In diesem Fall können kryptographischen Funktionen, unter anderem auch die Entschlüsselung des verschlüsselt zur Verfügung gestellten Schlüssels, in der Chipkarte durchgeführt werden. Eine solche Chipkarte kann ein USB-Token sein.

Insbesondere zur Verwendung in einem System zur autorisierten Entschlüsselung von verschlüsselten Daten verwendet man vorteilhafterweise einen Chipkartenleser mit einer Speichereinheit mit einem gespeicherten Zertifikat. Es kann sich dabei um ein Benutzerzertifikat handeln.

Vorzugsweise enthält ein Chipkartenleser, der insbesondere zur Verwendung in einem System zur autorisierten Entschlüsselung von verschlüsselten Daten verwendet wird, ein kryptographisches Modul. In diesem Fall können kryptographische Funktionen im Chipkartenleser durchgeführt werden.

Im folgenden werden besondere Ausführungsformen der Erfindung unter Bezugnahme auf die beigefügte Zeichnung erläutert. In der Zeichnung zeigen:
- Fig. 1: ein System zur autorisierten Entschlüsselung von verschlüsselten Daten mit Wiedergabevorrichtungen,
- Fig. 2: ein Hintergrundsystem, und
- Fig. 3: eine unabhängige Nutzungseinrichtung.

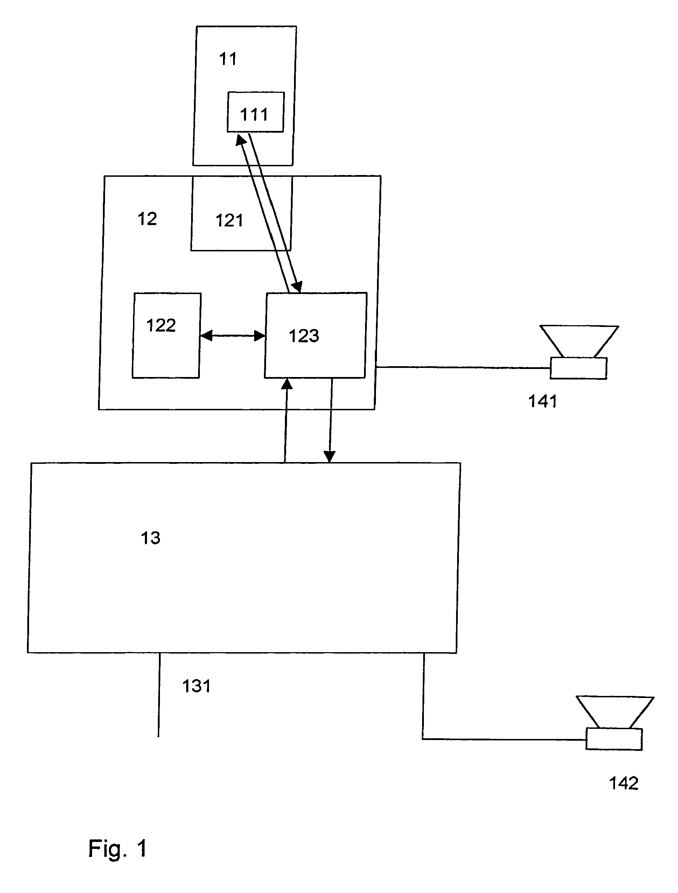

In Fig. 1 ist ein System zur autorisierten Entschlüsselung von verschlüsselten Daten mit Wiedergabevorrichtung zu sehen. Eine sichere Datenverarbeitungseinrichtung 11 (z.B. Chipkarte) enthält einen Datenspeicher 111. Die sichere Datenverarbeitungseinrichtung ist fest oder vorübergehend mit einer sicheren Datenverarbeitungseinrichtung 12 (z.B. Chipkartenleser, Einschubmodul, Mobiltelefon, Computermaus, Tastatur, Fernbedienung für elektronische Geräte) verbunden. Die sichere Datenverarbeitungseinrichtung 12 umfaßt eine Verbindungseinheit 121 für die Verbindung mit der sicheren Datenverarbeitungseinrichtung 11, eine Speichereinheit 122 und ein kryptographisches Modul 123. Die Kommunikation zwischen den sicheren Datenverarbeitungseinrichtungen 12 und 11 erfolgt im Normallfall kryptographisch gesichert, z.B. durch Secure Messaging. Die Verbindung kann über elektrische Kontakte, drahtlos oder über Telekommunikationskanäle erfolgen.

Mit der sicheren Datenverarbeitungseinrichtung 12 ist eine Nutzungs-/Wiedergabevorrichtung 141 und eine Datenverarbeitungseinrichtung 13 verbunden. Die Datenverarbeitungseinrichtung 13 kann z.B in einen Computer, einen Fernseher, eine Stereoanlage, eine Videoanlage, einen MP3-Player, ein eBook, einen Datenterminal, einen Thin-Client oder eine Workstation integriert sein. Die Datenverarbeitungseinrichtungen 12 und 13 können gemeinsam in einer baulichen Einheit integriert sein.

Die sichere Datenverarbeitungseinrichtung 12 und/oder die Datenverarbeitungseinrichtung 13 können mit einer Nutzungs-/Wiedergabevorrichtung 141, 142 verbunden sein, wie z.B. Lautsprecher, Kopfhörer, Monitor, Fernseher, Stereoanlage, MP3-Player, eBook, Internet-Appliance., Computer, Organizer oder PDA. Die Datenverarbeitungseinrichtung 13 ist außerdem über einen Anschluß 131 fest oder vorübergehend mit einem Daten-, Telefon- oder Rundfunknetz verbunden.

Die verschlüsselten Daten und ihre Zusatzinformation sind auf der Datenverarbeitungseinrichtung 13, einem externen Speichermedium, über eine LAN- oder WAN-Verbindung zugreifbar. Das Attributzertifikat, das spezifisch für bestimmte Daten und für den Benutzer ist, kann mit Hilfe gängiger Methoden des E-Commerce erworben werden: Der Benutzer erwirbt ein auf ihn (Benutzerzertifikat) und einen bestimmten Inhalt (Zusatzinformationen) spezifisches Attributzertifikat, das er in einem beliebigen Datenspeicher aufbewahrt. Alternativ erwirbt der Benutzer einen tragbaren Datenspeicher oder eine tragbare Datenverarbeitungseinrichtung, auf dem/der ein für diesen Datenspeicher oder den Benutzer spezifisches Zertifikat sowie ein für den Inhalt spezifisches Attributzertifikat enthalten sind. Nach einer weiteren Alternative erwirbt der Benutzer einen tragbaren Datenspeicher, auf der das Attributzertifikat gespeichert ist.

Das Attributzertifikat kann in einer Datenablage (Repository) abgelegt werden, in der sich auch schon andere Attributzertifikate des Benutzers befinden können. Das Repository kann auf einer der Datenverarbeitungseinrichtungen 11, 12 oder 13, oder auf einem beliebigen Platz im WAN bzw. Internet liegen. Vom kryptographischen Standpunkt ist es öffentlich. Die Datenverarbeitungseinrichtung 11 oder 12 enthält das Benutzerzertifikat.

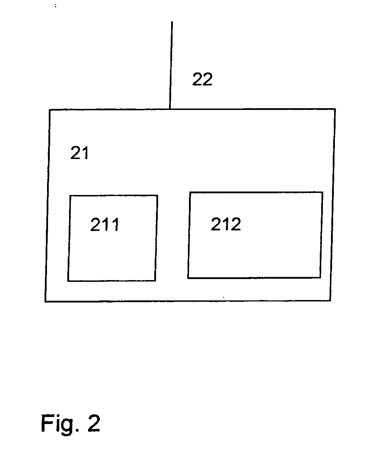

In Fig. 2 ist eine Prüfstelle 21 zur Gültigkeitsüberprüfung der Zertifikate dargestellt. Von einer Datenverarbeitungseinrichtung (bspw. Datenverarbeitungseinrichtung 11,12 oder 13 in Fig. 1) werden Benutzer-, Attributzertifikat und Zusatzinformation über ein Datenoder Telefonnetz 22 an eine Prüfstelle 21 (z.B. Herausgeber, Trust Center) geschickt und dort in einer Speichereinheit 211 gespeichert. Die Prüfstelle überprüft, ob die einzelnen Zertifikate gültig sind und zusammenpassen. Falls die Prüfung ein positives Ergebnis liefert, wird der Schlüssel bereitgestellt. Falls er verschlüsselt in der Zusatzinformation enthalten ist, wird er daraus mit dem kryptographischen Modul 212 entschlüsselt. Nach einer anderen Möglichkeit wird er aus der Zusatzinformation berechnet. Falls die Zertifikate nicht mehr gültig sind oder keine Berechnung des Schlüssels möglich ist, wird eine neue verschlüsselte Datei mit Zusatzinformation an den Benutzer übertragen und/oder ein Zertifikatsupdate durchgeführt.

Der Schlüssel wird mit dem öffentlichen Schlüssel des Benutzerzertifikats in dem kryptographischen Modul 212 verschlüsselt und an den Benutzer verschickt. Dem verschlüsselten Schlüssel können Zusatzinformationen beigefügt werden, die optional vom Herausgeber signiert sind.

Der verschlüsselte Schlüssel wird bspw. in der Datenverarbeitungseinrichtung 11 in Fig. 1 entschlüsselt bzw. berechnet und an die Datenverarbeitungseinrichtung 12 in Fig. 1 übertragen. Falls eine entsprechende Information in den Zusatzinformationen vorhanden ist, wird er bspw. in der Datenverarbeitungseinrichtung 12 in Fig. 1 dauerhaft oder für eine bestimmte Zeit gespeichert. Er muss dann für wiederholtes Entschlüsseln nicht erneut bezogen werden.

Eine unsichere Datenverarbeitungseinrichtung (bspw. Datenverarbeitungseinrichtung13 in Fig. 1) schickt die verschlüsselten Daten als Datenstrom (Stream) an eine sichere Datenverarbeitungseinrichtung (bspw. Datenverarbeitungseinrichtung 12 in Fig. 1). Dort wird die Entschlüsselung durchgeführt und der entschlüsselte Datenstrom entweder an die unsichere Datenverarbeitungseinrichtung zurückgeschickt oder direkt an eine Wiedergabevorrichtung (bspw. Wiedergabevorrichtung 141 in Fig. 1). Falls es sich bei den Daten um ein Computerprogramm handelt, kann dieses in den Arbeitsspeicher der unsicheren Datenverarbeitungseinrichtung geladen und ausgeführt werden.

Entsprechend einer nicht dargestellten Ausführungsform kann die Gültigkeitsüberprüfung auch in einer der benutzerseitigen Datenverarbeitungseinrichtungen (bspw. sichere Datenverarbeitungseinrichtung 11 oder 12 bzw. unsichere Datenverarbeitungseinrichtung 13 in Fig. 1) durchgeführt werden. Falls die Überprüfung positiv verläuft, kann der Schlüssel in einer der Datenverarbeitungseinrichtungen - vorzugsweise einer sicheren - berechnet werden. Alternativ kann auch der Schlüssel über ein Daten- oder Telefonnetz angefordert werden. Hierbei kann der Schlüssel verschlüsselt (z.B. Public-Key) oder unverschlüsselt übermittelt werden.

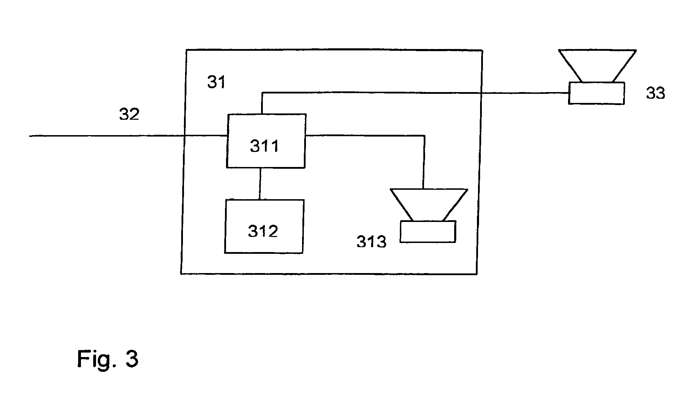

Eine besondere Ausführung einer Wiedergabevorrichtung 31 ist in Fig. 3 zu sehen. Sie ist über eine Verbindung 32 mit einer Datenverarbeitungseinrichtung verbunden und umfaßt eine Speichereinheit 312, ein kryptographisches Modul 311 und eine integrierte Wiedergabevorrichtung 313. Optional kann eine externe Wiedergabevorrichtung 33 angeschlossen sein. In diesem Fall können die verschlüsselten Daten mit dem Schlüssel in der Wiedergabevorrichtung gespeichert werden. Bei Bedarf werden die Daten entschlüsselt.

## Patentansprüche

1. Verfahren zur autorisierten Entschlüsselung von verschlüsselten Daten unter Zuhilfenahme von mindestens zwei Zertifikaten mit den Schritten:
a) Bereitstellen von verschlüsselten Daten,
b) Bereitstellen eines Schlüssels bei Gültigkeit der mindestens zwei Zertifikate,
c) Entschlüsselung der Daten mit dem Schlüssel, in welchem die mindestens zwei Zertifikate
- mindestens ein Benutzerzertifikat, das zur Identifikation des Benutzers vorgesehen ist, und
- mindestens ein Attributzertifikat, das zur Speicherung der Erlaubnis/Berechtigung zur Nutzung der verschlüsselten Daten vorgesehen ist, umfassen.

2. Verfahren nach Anspruch 1, in welchem das Bereitstellen des Schlüssels erfolgt, indem der Schlüssel mit Hilfe der mindestens zwei Zertifikate ermittelt wird.

3. Verfahren nach Anspruch 1, in welchem der Schlüssel über ein Daten-, Telefon- oder Rundfunknetz bereitgestellt wird.

4. Verfahren nach Anspruch 3, in welchem der Schlüssel verschlüsselt bereitgestellt wird.

5. Verfahren nach einem der vorherigen Ansprüche, in welchem neben den verschlüsselten Daten eine Zusatzinformation bereitgestellt wird, die zur Identifikation der verschlüsselten Daten verwendet wird, ohne daß diese entschlüsselt werden.

6. Verfahren nach einem der vorherigen Ansprüche, in welchem neben den verschlüsselten Daten eine Zusatzinformation bereitgestellt wird, die zum Bereitstellen des Schlüssels der verschlüsselten Daten verwendet wird.

7. Verfahren nach einem der vorherigen Ansprüche, in welchem neben den verschlüsselten Daten eine Zusatzinformation bereitgestellt wird, die einen Teil der verschlüsselten Daten in unverschlüsselter Form enthält.

8. Verfahren nach einem der vorherigen Ansprüche, in welchem die Prüfung der Gültigkeit der mindestens zwei Zertfikate in einer Datenverarbeitungseinrichtung eines Herausgebers oder eines Benutzers erfolgt.

9. Verfahren nach einem der vorherigen Ansprüche, in welchem die Prüfung der Gültigkeit in einer tragbaren Datenverarbeitungseinrichtung, insbesondere einem Notebook, elektronischen Organizer oder Mobiltelefon, erfolgt.

10. Verfahren zur autorisierten Ausführung eines verschlüsselten Datenverarbeitungsprogramms mit den Schritten:
a) Entschlüsseln des verschlüsselten Datenverarbeitungsprogramms mit dem Verfahren gemäß einem der Ansprüche 1 - 9,
b) Laden des Datenverarbeitungsprogramms in den Arbeitsspeicher einer Datenverarbeitungseinrichtung,
c) Ausführen des Datenverarbeitungsprogramms durch die Datenverarbeitungseinrichtung.

11. Verfahren zur autorisierten Wiedergabe von verschlüsselten akustischen oder optischen Daten mit den Schritten:
a) Entschlüsseln des verschlüsselten-verschlüsselten akustischen oder optischen Daten mit dem Verfahren gemäß einem der Ansprüche 1 - 9,
b) Weiterleiten der akustischen oder optischen Daten an eine Wiedergabevorrichtung.

12. Computerprogrammprodukt, das direkt oder indirekt in den Arbeitsspeicher eines Computers geladen werden kann und Kodierungsabschnitte umfaßt, die ein Bereitstellen eines Schlüssels bei Gültigkeit von mindestens zwei Zertifikaten gemäß Schritt c) des Verfahrens nach einem der Ansprüche 1 - 9 ausführen können.

13. System zur autorisierten Entschlüsselung von verschlüsselten Daten, insbesondere zur Durchführung des Verfahrens nach einem der Ansprüche 1 - 9, mit einem kryptographischen Modul und mindestens einer Speichereinheit, in welcher mindestens zwei Zertifikate gespeichert sind.

14. System nach Anspruch 13, in welchem das kryptographische Modul und die mindestens eine Speichereinheit mit mindestens zwei darin gespeicherten Zertifikaten in einer Chipkarte vorgesehen sind.

15. Chipkartenleser, insbesondere zur Verwendung in einem System zur autorisierten Entschlüsselung von verschlüsselten Daten gemäß Anspruch 13, mit einer Speichereinheit mit einem darin gespeicherten Zertifikat.

16. Chipkartenleser, insbesondere zur Verwendung in einem System zur autorisierten Entschlüsselung von verschlüsselten Daten gemäß Anspruch 13 oder 15, mit einem kryptographischen Modul.

## Claims

1. Method for authorized decryption of encrypted data with assistance of at least two certificates comprising the steps:
(a) Provision of encrypted data,
(b) Provision of a key, if the validity of the at least two certificates has been verified,
(c) Decryption of the data using the key, in which the at least two certificates comprise:
at least one user certificate, provided for identifying a user, and
at least one attribute certificate, provided for storing the permission/authorization to use the encrypted data.

2. Method according to claim 1 in which the key is provided after having been determined with the help of the at least two certificates.

3. Method according to claim 1 in which the key is provided over a data, telephone, or radio network.

4. Method according to claim 3, in which the key is provided in encrypted form.

5. Method according to one of the above claims, in which apart from the encrypted data additional information is provided to identify the encrypted data without the need for decryption.

6. Method according to one of the above claims, in which apart from the encrypted data additional information is provided to procure the key for decrypting the encrypted data.

7. Method according to one of the above claims, in which apart from the encrypted data additional information is provided which contains some of the encrypted data in unencrypted form.

8. Method according to one of the above claims, in which the validity of the two certificates is verified in a data processing device of an issuer or a user.

9. Method according to one of the above claims, in which the validity if verified in a portable data processing device, particularly a notebook, an electric organizer or a mobile phone.

10. Method for an authorized execution of an encrypted data processing program comprising the following steps:
(a) Decryption of the encrypted data processing program using methods according to one of the claims 1 - 9,
(b) Loading of the data processing program to the main memory of a data processing device,
(c) Execution of the data processing program by the data processing device.

11. Method for an authorized play-back of encrypted acoustic and optical data comprising the following steps:
(a) Decryption of the encrypted acoustic and optical data using the method according to one of the claims 1 - 9,
(b) Forwarding of the acoustic and optical data to a play-back device.

12. Computer program product, which can be directly or indirectly connected to the main memory of a computer and which consists of coded segments that provide a key if at least two certificates are valid according to step (c) of the method of one of the claims 1 - 9.

13. System for authorized decryption of encrypted data, in particular for performing the method of one of the claims 1 - 9 with a cryptographic module and at least one storage unit with at least two stored certificates.

14. System according to claim 13, in which the cryptographic module and the at least one storage unit with at least two stored certificates are intended for a chip card.

15. Chip card reader, in particular for use in system for authorized decryption of encrypted data according to claim 13 with a storage unit containing on certificate.

16. Chip card reader, in particular for use in a system for authorized decryption of encrypted data according to claims 13 or 15 with a cryptographic module.

## Revendications

1. Procédé pour le décryptage autorisé de données cryptées à l'aide d'au moins deux certificats avec les étapes de :
a) fourniture de données cryptées,
b) fourniture d'une clé en cas de validité des au moins deux certificats,
c) décryptage des données avec la clé, dans lequel sont inclus les au moins deux certificats
- au moins un certificat d'utilisateur, qui est prévu pour l'identification de l'utilisateur, et
- au moins un certificat d'attribut, qui est prévu pour le stockage de la permission/l'autorisation pour l'utilisation des données cryptées.

2. Procédé selon la revendication 1, dans lequel la fourniture de la clé intervient par le fait que la clé est déterminée à l'aide des au moins deux certificats.

3. Procédé selon la revendication 1, dans lequel la clé est fournie au moyen d'un réseau de données, d'un réseau de téléphone ou d'un réseau radio.

4. Procédé selon la revendication 3, dans lequel la clé est fournie sous forme cryptée.

5. Procédé selon l'une des revendications précédentes, dans lequel, en plus des données cryptées, on fournit une information supplémentaire qui est utilisée pour l'identification des données cryptées sans que celles-ci soient décryptées.

6. Procédé selon l'une des revendications précédentes, dans lequel, en plus des données cryptées, on fournit une information supplémentaire qui est utilisée pour la fourniture de la clé des données cryptées.

7. Procédé selon l'une des revendications précédentes, dans lequel, en plus des données cryptées, on fournit une information supplémentaire qui contient une partie des données cryptées sous forme non cryptée.

8. Procédé selon l'une des revendications précédentes, dans lequel s'effectue le test de validité des au moins deux certificats dans un dispositif de traitement de données d'un éditeur ou d'un utilisateur.

9. Procédé selon l'une des revendications précédentes, dans lequel s'effectue le test de validité dans un dispositif de traitement de données portatif, en particulier un ordinateur portable, un organiseur électronique ou un téléphone mobile.

10. Procédé pour l'exécution autorisée d'un programme de traitement de données cryptées avec les étapes de :
a) décryptage du programme de traitement de données cryptées avec le procédé selon l'une des revendications 1 à 9,
b) chargement du programme de traitement de données dans la mémoire de travail d'un dispositif de traitement de données,
c) mise en oeuvre du programme de traitement de données par le dispositif de traitement de données.

11. Procédé pour la restitution autorisée de données acoustiques ou optiques cryptées avec les étapes de :
a) décryptage des données acoustiques ou optiques cryptées avec le procédé selon l'une des revendications 1 à 9,
b) réacheminement des données acoustiques ou optiques à un dispositif de restitution.

12. Produit de programme informatique, qui peut être chargé directement ou indirectement dans la mémoire de travail d'un ordinateur et comprend des parties de codage qui peuvent exécuter une fourniture d'une clé en cas de validité d'au moins deux certificats selon l'étape c) du procédé selon l'une des revendications 1 à 9.

13. Système pour le décryptage autorisé de données cryptées, en particulier pour la mise en oeuvre du procédé selon l'une des revendications 1 à 9 avec un module cryptographique et au moins une unité de stockage dans laquelle sont stockés au moins deux certificats.

14. Système selon la revendication 13, dans lequel sont prévus le module cryptographique et la au moins une unité de stockage avec au moins deux certificats stockés à l'intérieur dans une carte à puce.

15. Lecteur de cartes à puce, en particulier pour l'utilisation dans un système pour le décryptage autorisé de données cryptées selon la revendication 13, avec une unité de stockage avec un certificat stocké à l'intérieur.

16. Lecteur de cartes à puce, en particulier pour l'utilisation dans un système pour le décryptage autorisé de données cryptées selon la revendication 13 ou 15, avec un module cryptographique.
